# EUROPÄISCHE PATENTANMELDUNG

(11) **EP 2 495 474 A1**
(43) Veröffentlichungstag der Anmeldung: **05.09.2012**
(21) Anmeldenummer: 11156615.4
(22) Anmeldetag: 02.03.2011
(51) Int. Cl.: F16H 55/12, F16H 55/17

(54) **Getriebezahnrad mit Wechselverzahnung**

(71) Anmelder: SIEMENS AKTIENGESELLSCHAFT, 80333 München (DE); Winergy AG, 46562 Voerde (DE)
(72) Erfinder: Ehben, Thomas, 26446, Friedeburg (DE); Reimers, Jan-Dirk, 52074, Aachen (DE)
(74) Vertreter: Maier, Daniel Oliver

(57) **Zusammenfassung**

Getriebezahnrad (ZR1,ZR2,ZR3) mit Zahnradkörper (RK1-RK3,RK1') und wechselbaren Zähnen, wobei ein oder mehrere Zähne (Z1-Z7) als ein Bauteil (B1-B4,B1') ausgebildet sind, das mittels einer lösbaren Verbindung (V1-V8,V1') mit dem Zahnradkörper des Getriebezahnrads verbindbar ist. Getriebe mit derartig ausgebildeten Getriebezahnrädern. Bauteil mit einem oder mehreren wechselbaren Zähne geeignet zur Verwendung in einem Getriebezahnrad mit Zahnradkörper, wobei das Bauteil mittels einer lösbaren Verbindung mit dem Zahnradkörper des Getriebezahnrads verbindbar ist.

## Beschreibung

Die vorliegende Erfindung betrifft ein Getriebezahnrad mit Zahnradkörper und wechselbaren Zähnen. Weiterhin betrifft die Erfindung Getriebe mit Getriebezahnrädern mit wechselbaren Zähnen.

Getriebezahnräder in Hochleistungsgetrieben (z.B. für Schiffsantriebe, Windgetriebe, Hubwerke) sind hohen mechanischen Belastungen ausgesetzt, die zu Verschleiß und einer begrenzten Lebensdauer führen können. Problematisch ist insbesondere eine punktuelle Überbelastung im Sinne einer statischen Schädigungslast aus dem Betrieb heraus, oder aber einer zyklischen Dauerlast im Betrieb, die sich Z.B. von lokalen Materialimperfektionen wie Einschlüssen, Kerben oder Steifigkeitssprüngen (inneren Kerben) ausgehend zu einem Materialschaden ausweiten können. Diese Schäden können durch die dauerhafte Überrollung der Verzahnung ausgeweitet werden.

Ein weiterer Schadensmechanismus sind sogenannten Stillstandsmarken oder Transportschäden, die nicht durch eine Überrollung oder den Betrieb als solchen, sondern durch vollständig statische oder quasistatische Kontakte innerhalb der Verzahnung beim Transport, beim Trudeln einer Windanlage oder bei Festsetzung eines Hubwerks entstehen können. Hier insbesondere sind auch Yaw- oder Pitchantriebe für Windanlagen betroffen, die prinzipbedingt in einem Arbeitspunkt einen ständigen statischen Zahnkontakt aufweisen, der auf diese Art belastet wird. Auch diese Schäden können und werden dann durch die später Überrollung ausgeweitet und auf weitere Verzahnungen übertragen, wenn nicht geeignete Maßnahmen ergriffen werden können.

Diese kann zu Beschädigungen der Zahnflanken oder zu einem Zahnbruch führen. Bekannte Schädigungsformen sind z.B. Pittings (Grübchenbildung, Lochfraß), Zahnflankenbrüche und Zahnfußbrüche sowie auch Graufleckigkeit (Micropittings). Diese Überlastschäden oder Verschleißerscheinungen führen meist kurzfristig zu einem vollständigen Getriebeausfall, da weitere Zähne und in Folge dessen auch die Lagerungen durch direkten mechanischen Eingriff und Verunreinigung des Schmiermittels durch Zahnreste rasch lawinenartig in Mitleidenschaft gezogen werden. Ein aufwändiger Reparaturfall ist die Folge.

Neben der Verwendung hochwertiger Werkstoffe sowie hochwertiger und gefilterter Schmiermittel kommt zur Vermeidung von Schadensfortpflanzung durch einsetzende Zahnschäden vor allem der sofortige Austausch defekter Zahnräder bei feststellbarer initialer Schädigung eines oder mehrerer Zähne in Frage. Diese Methode ist allerdings bei bestimmten Anwendungen limitiert, z.B. wenn eine einfache Zugänglichkeit der Zahnräder verhindert ist. Dies ist z.B. der Fall, wenn ein Zahnradwechsel die Demontage eines großen, schweren umgebenden Gesamtsystems erforderlich macht, oder wenn das gesamte System aufgrund von Umgebungsbedingungen nur eingeschränkt zugänglich ist, z.B. bei Offshore-Windturbinen oder bei Schiffsantrieben.

Es ist Aufgabe der vorliegenden Erfindung einfach wartbare Getriebezahnräder und Getriebe bereitzustellen.

Die Aufgabe wird gelöst durch ein Getriebezahnrad mit Zahnradkörper und wechselbaren Zähnen, wobei ein oder mehrere Zähne als ein Bauteil ausgebildet sind, das mittels einer lösbaren Verbindung mit dem Zahnradkörper des Getriebezahnrads verbindbar ist. Verschlissene oder gebrochene Zähne von Zahnrädern können somit leicht ausgetauscht werden, ohne, dass das gesamte Zahnrad ausgetauscht werden muss.

Eine erste vorteilhafte Ausgestaltung der Erfindung liegt darin, dass die lösbare Verbindung durch eine radiale oder eine axiale Verschraubung erfolgt. Verschraubungen ermöglichen ein schnelles und sicheres Verbinden des Bauteils mit dem Zahnradkörper. Je nach Zugänglichkeit im Getriebe kann die Verschraubung radial und/oder axial erfolgen.

Eine weitere vorteilhafte Ausgestaltung der Erfindung liegt darin, dass die lösbare Verbindung durch eine formschlüssig ineinander greifende Verzapfung zwischen Bauteil und Zahnradkörper erfolgt. Dadurch wird eine besonders günstige Übertragung der Zahnkraft auf den Radkörper ermöglicht.

Eine weitere vorteilhafte Ausgestaltung der Erfindung liegt darin, dass benachbarte Bauteile miteinander verbunden sind. Dadurch wird die Gesamtstabilität des Zahnradverbundes erhöht.

Eine weitere vorteilhafte Ausgestaltung der Erfindung liegt darin, dass die benachbarten Bauteile durch eine formschlüssige Verzapfung und/oder durch eine Verschraubung miteinander verbunden sind. Dadurch wird die Gesamtstabilität des Zahnradverbundes noch weiter erhöht.

Eine weitere vorteilhafte Ausgestaltung der Erfindung liegt darin, dass zusätzlich wechselbare Zahnüberzüge vorgesehen sind. Insbesondere als Provisorium oder Notlösung sind austauschbare Zahnüberzüge, um die Ausfall- oder Standzeit eines Getriebes gering zu halten oder mit eingeschränkter Leistung weiter zu arbeiten.

Eine weitere vorteilhafte Ausgestaltung der Erfindung liegt darin, dass anstelle der wechselbaren Zähne wechselbare Zahnüberzüge vorgesehen sind. Insbesondere als Provisorium oder Notlösung sind austauschbare Zahnüberzüge, um die Ausfall-oder Standzeit eines Getriebes gering zu halten oder mit eingeschränkter Leistung weiter zu arbeiten, bis ein vollständiger Austausch des Zahnes oder des Getrieberades erfolgt.

Eine weitere vorteilhafte Ausgestaltung der Erfindung liegt darin, dass der Verzahnungswerkstoff aus einem hinsichtlich Zähigkeit oder Härte anders ausgeprägten Material besteht als der Zahnradkörper. Der Grundkörper des Zahnrades kann aus einem einfacheren und daher preiswerterem Material (z.B. Gusseisen) bestehen als die Verzahnung (z.B. Stahl), da im Bereich der Verzahnung eine stärkere mechanische Belastung auftritt. Dadurch können insbesondere Herstellungskosten eingespart werden. Weiterhin kann der Grundkörper z.B. durch Umformung (z.B. Schmieden, Pressen) hergestellt werden und die Verzahnung durch ein spanendes Verfahren (z.B. Wälzhobeln).

Eine weitere vorteilhafte Ausgestaltung der Erfindung liegt darin, dass die Bauteile (Segmente bzw. Wechselsegmente) jeweils unterschiedliche Zahnanzahlen aufweisen. Dadurch werden Eigenfrequenzanregungen vermieden und Kraft- und Momentstöße aufgrund von Formabweichungen werden besser verteilt und häufen sich nicht.

Eine weitere vorteilhafte Ausgestaltung der Erfindung liegt darin, dass die Zahnanzahl pro Bauteil (Segment bzw. Wechselsegment) eine Primzahl ist. Dadurch werden Eigenfrequenzanregungen verhindert bzw. vermieden.

Die Aufgabe wird weiterhin gelöst durch ein Getriebe mit Getriebezahnrädern, wobei mindestens ein Getriebezahnrad nach einem der Ansprüche 1 bis 10 ausgebildet ist. Getriebe mit Zahnrädern mit wechselbaren Zähnen sind insbesondere leicht wartbar, da ein Zahnrad nicht vollständig ausgetauscht werden muss. Außerdem ist der Austausch von Zähnen kostengünstiger als der Austausch eines vollständigen Getriebezahnrades.

Die Aufgabe wird weiterhin gelöst durch ein Getriebe mit Getriebezahnrädern, wobei bei einer Zahnradpaarung umfassend ein erstes Getriebezahnrad und ein zweites Getriebezahnrad, nur das erste Getriebezahnrad nach einem der Ansprüche 1 bis 10 ausgebildet ist, wobei das Bauteil mit den wechselbaren Zähnen und/oder wechselbaren Zahnbezügen aus einem weicheren Werkstoff gefertigt ist als das zweite Getriebezahnrad. Insbesondere bei einer besonders hoch beanspruchten Zahnradpaarung macht es Sinn nur eines der Zahnräder mit den erfindungsgemäßen Wechselzahnrädern auszustatten, dessen Zähne aus einem weicheren Werkstoff als die des anderen, konventionell fest verzahnten Rades gefertigt sind. So erfüllt das Wechselzahnrad die Rolle eines Opferzahnrades. Es kann während des Betriebes davon ausgegangen werden, dass seine Zähne zuerst Verschleißerscheinungen zeigen werden. Während seine Zähne mit geringem Aufwand gewechselt werden können, kann das andere Zahnrad in der eventuell weniger aufwändigen konventionellen Bauweise hergestellt werden.

Die Aufgabe wird weiterhin gelöst durch ein Getriebe mit Getriebezahnrädern, wobei bei einer Zahnradpaarung umfassend ein erstes Getriebezahnrad und ein zweites Getriebezahnrad, beide Getriebezahnräder nach einem der Ansprüche 1 bis 10 ausgebildet sind, und wobei die Aufteilung der Zähne auf die Bauteile (Segmente) im jedem Getriebezahnrad (Wechselzahnrad) voneinander abweicht. Dadurch werden Eigenfrequenzanregungen vermieden und Kraft- und Momentstöße aufgrund von Formabweichungen werden besser verteilt bzw. häufen sich nicht.

Die Aufgabe wird weiterhin gelöst durch ein Bauteil mit einem oder mehreren wechselbaren Zähne geeignet zur Verwendung in einem Getriebezahnrad (Wechselzahnrad) mit Zahnradkörper, wobei das Bauteil mittels einer lösbaren Verbindung mit dem Zahnradkörper des Getriebezahnrads verbindbar ist. Im Schadfall eines Zahnes kann das Bauteil wie bei einem Wechselwerkzeug ausgetauscht werden, oder der schadhafte Zahn kann ausgetauscht werden. Ein Austausch des gesamten Getriebezahnrads ist nicht erforderlich.

Ein Ausführungsbeispiel der Erfindung ist in der Zeichnung dargestellt und wird im Folgenden erläutert.

Dabei zeigen:
- FIG 1: in einer schematischen Übersichtsdarstellung den prinzipiellen Aufbau eines Zahnrades mit Wechsel-verzahnung ,
- FIG 2: zeigt ein zweites beispielhaftes Zahnrad und bei-spielhafte Verbindungen der Zahnsegmente (Bauteile) mit dem Grundkörper beziehungsweise untereinander, und
- FIG 3: ein weiteres Ausführungsbeispiel für eine Verbin-dung der Zahnsegmente mit dem Grundkörper analog zu einem Wechselwerkzeug.

Erfindungsgemäß wird ein Getriebezahnrad mit wechselbaren Zähnen oder Zahnüberzügen vorgeschlagen. Dabei sind jeweils ein oder mehrere Zähne als ein Bauteil mittels einer lösbaren Verbindung mit einem Zahnradkörper verbunden. Die lösbare Verbindung besteht vorzugsweise in einer axialen oder radialen Verschraubung. In einer besonderen Ausführung sind Radkern und Zahnsegment mit einer formschlüssig ineinander greifenden Verzapfung versehen, die eine besonders günstige Übertragung der Zahnkraft auf den Radkörper ermöglicht. In einer weiteren besonderen Ausführung sind jeweils benachbarte Zahnsegmente mit einer formschlüssigen Verzapfung versehen, die die Gesamtstabilität des Zahnradverbundes erhöht. Eine weitere Ausführung sieht ein Getriebe vor, bei dem bei einer besonders hoch beanspruchten Zahnradpaarung nur eines der Zahnräder mit erfindungsgemäßen Wechselzahnrädern ausgestattet ist und dessen Zähne aus einem weicheren Werkstoff als die des anderen, konventionell fest verzahnten Zahnrades gefertigt sind. So erfüllt das Wechselzahnrad die Rolle eines Opferzahnrades. Es kann während des Betriebes davon ausgegangen werden, dass seine Zähne zuerst Verschleißerscheinungen zeigen werden. Während seine Zähne mit geringem Aufwand gewechselt werden können, kann das andere Zahnrad in der evtl. weniger aufwändigen konventionellen Bauweise hergestellt werden. In einer weiteren Ausgestaltung der Erfindung kann in vorteilhafter Art und Weise eine Werkstoffanpassung an die Anforderungen der Belastung erfolgen, indem die Verzahnung aus einem besonders belastbaren Verzahnungswerkstoff (z.B. Stahl) und der Grundkörper aus einem einfacheren und daher preiswerterem Material (z.B. Gusseisen) bestehen kann. Dieser muss auch nicht aus einem Metall bestehen, wenn die Nabe wiederum ebenfalls lösbar gefugt wird. Es ist dadurch eine weitere Vorteilhafte Ausgestaltung erreichbar in der die Eigenschaften des Grundkörpers gemäß der Betriebserfordernisse der Schwingwerte, Dämpfung, Verformung oder ähnlichen betriebsrelevanten Eigenschaften modifiziert werden kann.

In einer weiteren vorteilhaften Ausgestaltung ist das Getriebe mit einer Zustandsüberwachung zur Identifizierung des Schadens ausgestattet. Hier können Schwingwerte oder Partikelraten zur Identifikation verwendet werden. Die genannten Ausführungsformen können beliebig miteinander kombiniert werden.

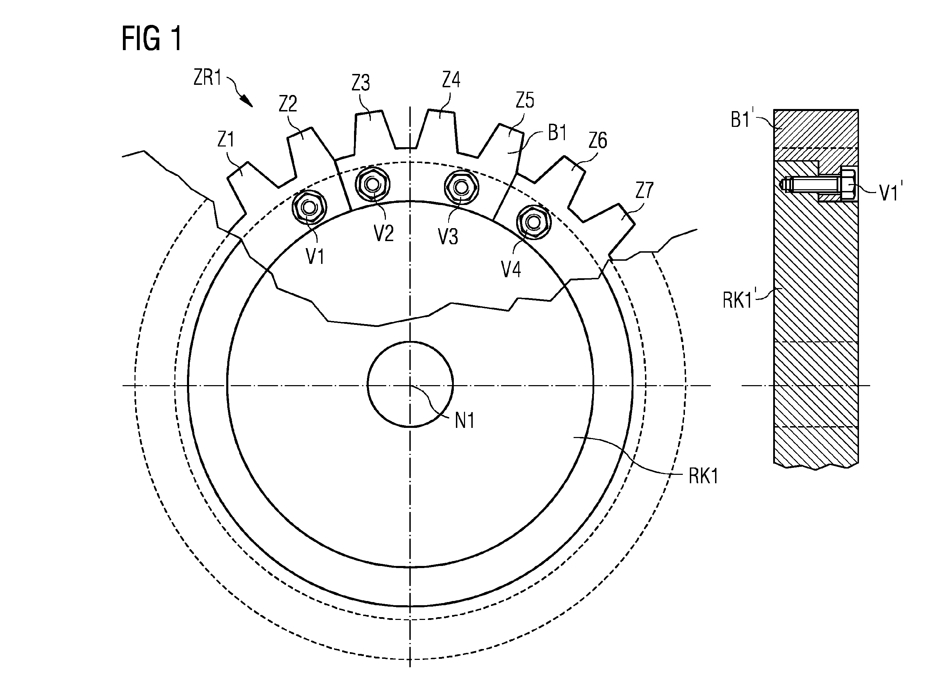

Figur 1 zeigt in einer schematischen Übersichtsdarstellung den prinzipiellen Aufbau eines Zahnrades ZR1 mit Wechselverzahnung. Das Getriebezahnrad ZR1 ist üblicherweise durch eine Nabe N1 auf einer Achse oder Welle befestigt und umfasst einen Zahnradkörper RK1, RK1' und wechselbare Zähne Z1 - Z7, wobei ein oder mehrere Zähne Z1 - Z7 als ein Bauteil B1, B1' ausgebildet sind, das mittels einer lösbaren Verbindung V1 - V4, V1' mit dem Zahnradkörper RK1, RK1' des Getriebezahnrads ZR1 verbindbar ist. Die lösbare Verbindung V1 - V4, V1' des Bauteil B1, B1' mit dem Zahnradkörper RK1, RK1' kann z.B. durch eine radiale und/oder eine axiale Verschraubung erfolgen. Die lösbare Verbindung V1 - V4, V1' kann auch oder anstelle oder kombiniert mit der Verschraubung durch eine formschlüssig ineinander greifende Verzapfung zwischen Bauteil B1, B1' und Zahnradkörper RK1, RK1' erfolgen.

Um eine höhere Stabilität des Rades ZR1 zu erreichen, sind vorteilhafter weise benachbarte Bauteile B1, B1' miteinander verbunden. Die Stabilität des Rades ZR1 wird weiter erhöht, wenn benachbarte Bauteile B1, B1' durch eine formschlüssige Verzapfung und/oder durch eine Verschraubung miteinander verbunden sind.

Es können an den Zähnen Z1 - Z7 wechselbare Zahnüberzüge vorgesehen sein, für alle oder für eine Teilmenge der Zähne Z1-Z7.

Die Möglichkeit der Wechselbarkeit bezieht sich auf die Zähne Z1 - Z7 selbst und auf die Bauteile B1, B1' auf denen die Zähne angebracht sind. Es kann somit ein Segment (Bauteil), das Zähne trägt, ausgetauscht werden, oder einzelne Zähne.

Der rechte Teil von Figur 1 zeigt in einer beispielhaften Detailsicht die Verschraubung V1' eines Bauteils B1' mit dem Radkörper RK1'.

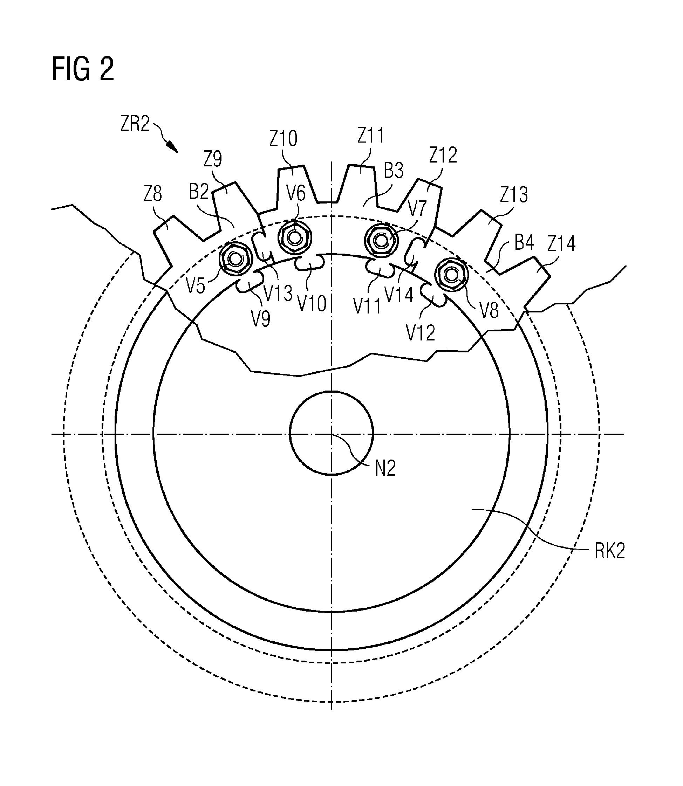

Figur 2 zeigt ein zweites beispielhaftes Zahnrad ZR2 und beispielhafte Verbindungen der Zahnsegmente (Bauteile) B2 - B4 mit dem Grundkörper RK2 beziehungsweise untereinander. Das Zahnrad ZR2 ist auf einer Nabe N2 gelagert. Die Zahnsegmente (Bauteile) B2 - B4 sind mit dem Grundkörper RK2 durch die Verbindungen V5 - V8 verschraubt und/oder durch die Verbindungen V9 - V12 mit dem Grundkörper RK2 verzapft. Aus Gründen des Haltes und der Stabilität ist vorzugsweise eine formschlüssige Verzapfung zu verwenden. Verzapfungsverbindungen sind durch Stecken oder Drücken leicht herstellbar. Optional können die Zahnsegmente (Bauteile) B2 - B4 auch untereinander verzapft (vorzugsweise formschlüssig) sein. Dies erhöht die Stabilität der Bauteile B2 - B4 und des Rades ZR2.

Auch im Beispiel nach Figur 2 bezieht sich die Möglichkeit der Wechselbarkeit auf die Zähne Z8 - Z14 selbst und auf die Bauteile B2 - B4 auf denen die Zähne Z8 - Z14 angebracht sind.

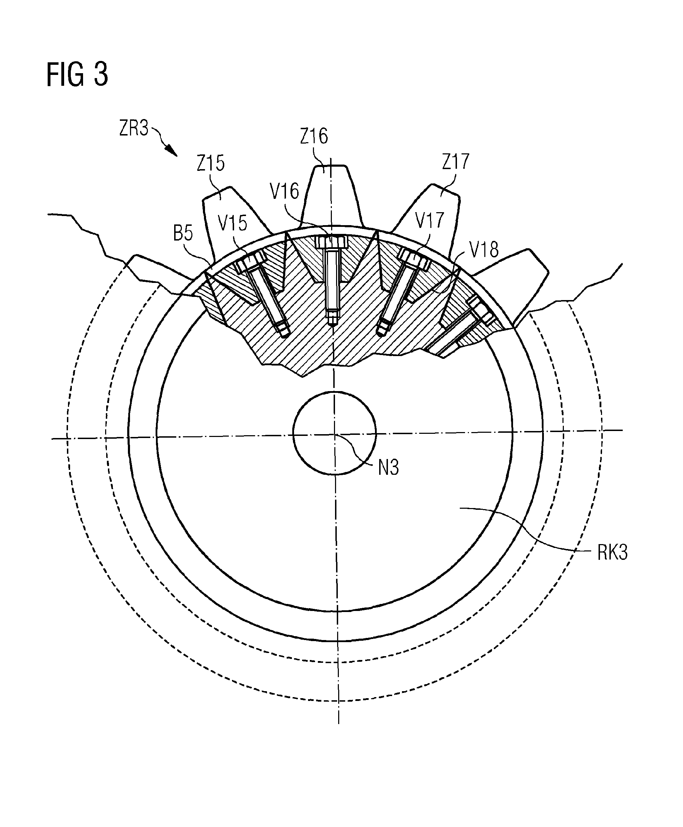

Figur 3 zeigt ein weiteres Ausführungsbeispiel für eine Verbindung der Zahnsegmente (Bauteil B5 mit Zähnen Z15 - Z17) mit dem Grundkörper RK3 analog zu einem Wechselwerkzeug. Die Zähne Z15 - Z17 sind im Bauteil B5 durch die Verbindungen V15 - V18 befestigt. Als Verbindungen V15 - V18 können z.B. Verschraubungen und/oder formschlüssige Verzapfungen verwendet werden. Vorteilhafter weise kann ein Klemmkonus für Passung und Zentrierung der Zähne verwendet werden. In Figur 3 wird vorgeschlagen, beim Austauschen eines Bauteils B5 wie bei einem Wechselwerkzeug vorzugehen. Der Radkörper RK3 des Getriebezahnrades ZR3 wird dabei mit einem Spannfutter versehen, in das das Bauteil B5 zwischen Spannbacken eingeklemmt und fixiert werden kann. Durch eine entsprechende geometrische Ausgestaltung des Spannfutters und des Bauteils B5 (z.B. kann das Spannfutter eine Trichterform und das Bauteil eine Konusform besitzen) kann ein leichtes Einführen des Bauteils B5 in das Spannfutter erfolgen. Dies ermöglicht weiterhin eine genaue Passung und Zentrierung des Bauteils B5 im Radkörper RK3. Es ist auch möglich einzelne Zähne Z15 - Z17 analog eines Wechselwerkzeuges auszutauschen.

Vorteile der Erfindung liegen insbesondere darin:
- Ein Zahnrad mit beginnender Beschädigung eines oder mehrerer Zähne muss nicht mehr komplett ausgetauscht werden, sondern die beschädigten Zähne oder Zahngruppen können einzeln gegen Neuteile ausgetauscht werden, während der Radkörper auf seiner Welle verbleibt.
- Die Demontage oder gar der Austausch des Getriebes kann so vermieden werden.
- Die Nutzungs- bzw. Lebensdauer der Getriebe kann somit signifikant verlängert werden, da Zahnschäden einen erheblichen Teil der in der Praxis auftretenden Getriebeschäden verursachen, bzw. eine Wechselwirkung mit Folgeschäden an Lagerungen bestehen, die ebenfalls vermindert werden können, wenn initiale Schädigungen einfach behoben werden könnten.
- Weiterhin kommt es über den gesamten Lebenszyklus des Getriebes zu einer deutlichen Materialersparnis. Zudem ergeben sich Vorteile für die Getriebefertigung. Zahnradkörper und Zähne lassen sich aus unterschiedlichen Werkstoffen herstellen, und eine Oberflächenhärtung kann sich auf die Zähne oder Zahngruppen beschränken, wodurch die thermisch zu behandelnden Materialvolumen und - massen stark verringert werden.
- Schließlich ergibt sich der Vorteil, dass sich Risse in den Zahnsegmenten nicht auf den Radkern oder auf Nachbarsegmente ausbreiten können, da keine stoffschlüssige Verbindung vorliegt.

Getriebezahnrad mit Zahnradkörper und wechselbaren Zähnen, wobei ein oder mehrere Zähne als ein Bauteil ausgebildet sind, das mittels einer lösbaren Verbindung mit dem Zahnradkörper des Getriebezahnrads verbindbar ist. Getriebe mit derartig ausgebildeten Getriebezahnrädern. Bauteil mit einem oder mehreren wechselbaren Zähne geeignet zur Verwendung in einem Getriebezahnrad mit Zahnradkörper, wobei das Bauteil mittels einer lösbaren Verbindung mit dem Zahnradkörper des Getriebezahnrads verbindbar ist.

### Bezugszeichen

- ZR1 - ZR3: Getriebezahnrad
- Z1 - Z17: Zahn
- RK1 - RK3, RK1': Radkörper
- N1 - N3: Nabe
- B1 - B4, B1': Bauteil
- V1 - V18, V1': Verbindung

## Patentansprüche

1. Getriebezahnrad (ZR1 - ZR3) mit Zahnradkörper und wechselbaren Zähnen, wobei ein oder mehrere Zähne (Z1 - Z17) als ein Bauteil (B1 - B4, B1') ausgebildet sind, das mittels einer lösbaren Verbindung (V1 - V18, V1') mit dem Zahnradkörper (RK1 - RK3, RK1') des Getriebezahnrads (ZR1 - ZR3) verbindbar ist.

2. Getriebezahnrad (ZR1 - ZR3) nach Anspruch 1,
wobei die lösbare Verbindung durch eine radiale oder eine axiale Verschraubung erfolgt.

3. Getriebezahnrad (ZR1 - ZR3) nach Anspruch 1 oder 2,
wobei die lösbare Verbindung (V1 - V18, V1') durch eine formschlüssig ineinander greifende Verzapfung zwischen Bauteil (B1 - B4, B1') und Zahnradkörper (RK1 - RK3, RK1') erfolgt.

4. Getriebezahnrad (ZR1 - ZR3) nach einem der vorstehenden Ansprüche, wobei benachbarte Bauteile (B1 - B4, B1') miteinander verbunden sind.

5. Getriebezahnrad (ZR1 - ZR3) nach Anspruch 4,
wobei die benachbarten Bauteile (B1 - B4, B1') durch eine formschlüssige Verzapfung und/oder durch eine Verschraubung miteinander verbunden sind.

6. Getriebezahnrad (ZR1 - ZR3) nach einem der Ansprüche 1 bis 5, wobei zusätzlich wechselbare Zahnüberzüge vorgesehen sind.

7. Getriebezahnrad (ZR1 - ZR3) nach einem der Ansprüche 1 bis 6, wobei anstelle der wechselbaren Zähne (Z1 - Z17) wechselbare Zahnüberzüge vorgesehen sind.

8. Getriebezahnrad (ZR1 - ZR3) nach einem der Ansprüche 1 bis 7, wobei der Verzahnungswerkstoff aus einem hinsichtlich Zähigkeit oder Härte anders ausgeprägten Material besteht als der Zahnradkörper (RK1 - RK3, RK1').

9. Getriebezahnrad (ZR1 - ZR3) nach einem der vorstehenden Ansprüche, wobei die Bauteile (B1 - B4, B1') jeweils unterschiedliche Zahnanzahlen aufweisen.

10. Getriebezahnrad (ZR1 - ZR3) nach einem der vorstehenden Ansprüche, wobei die Zahnanzahl pro Bauteil (B1 - B4, B1') eine Primzahl ist.

11. Getriebe mit Getriebezahnrädern (ZR1 - ZR3), wobei mindestens ein Getriebezahnrad nach einem der Ansprüche 1 bis 10 ausgebildet ist.

12. Getriebe mit Getriebezahnrädern (ZR1 - ZR3), wobei bei einer Zahnradpaarung umfassend ein erstes Getriebezahnrad (ZR1 - ZR3) und ein zweites Getriebezahnrad, nur das erste Getriebezahnrad (ZR1 - ZR3) nach einem der Ansprüche 1 bis 10 ausgebildet ist, wobei das Bauteil (B1 - B4, B1') mit den wechselbaren Zähnen (Z1 - Z17) und/oder wechselbaren Zahnbezügen aus einem weicheren Werkstoff gefertigt ist als das zweite Getriebezahnrad (ZR1 - ZR3).

13. Getriebe mit Getriebezahnrädern (ZR1 - ZR3), wobei bei einer Zahnradpaarung umfassend ein erstes Getriebezahnrad (ZR1 - ZR3) und ein zweites Getriebezahnrad (ZR1 - ZR3), beide Getriebezahnräder (ZR1 - ZR3) nach einem der Ansprüche 1 bis 10 ausgebildet sind, und wobei die Aufteilung der Zähne auf die Bauteile (Segmente) im jedem Getriebezahnrad (ZR1 - ZR3) voneinander abweicht.

14. Bauteil mit einem oder mehreren wechselbaren Zähne geeignet zur Verwendung in einem Getriebezahnrad (ZR1 - ZR3) nach einem der Ansprüche 1 bis 10, mit Zahnradkörper (RK1 - RK3, RK1'), wobei das Bauteil mittels einer lösbaren Verbindung mit dem Zahnradkörper (RK1 - RK3, RK1') des Getriebezahnrads (ZR1 - ZR3) verbindbar ist.
